# EUROPÄISCHE PATENTSCHRIFT

(11) **EP 0 635 171 B1**
(45) Veröffentlichungstag und Bekanntmachung des Hinweises auf die Patenterteilung: **20.12.1995**
(21) Anmeldenummer: 93903832.9
(22) Anmeldetag: 17.02.1993
(51) Int. Cl.: H02J 7/10, H02M 3/338

(54) **ELEKTRONISCHES SCHALTNETZTEIL**
SWITCHED ELECTRONIC SUPPLY UNIT
BLOC ELECTRONIQUE D'ALIMENTATION A DECOUPAGE

(30) Priorität: 10.04.1992 DE 4212041
(43) Veröffentlichungstag der Anmeldung: 25.01.1995
(73) Patentinhaber: Braun Aktiengesellschaft, Frankfurt am Main (DE)
(72) Erfinder: BERGK, Günther, D-65527 Niedernhausen (DE)
(86) Internationale Anmeldenummer: DE9300169
(87) Internationale Veröffentlichungsnummer: WO9321679

(56) Entgegenhaltungen:
- EP-A- 0 162 341
- EP-A- 0 226 253
- US-A- 4 965 506

## Beschreibung

Die Erfindung betrifft ein elektronisches Schaltnetzteil zur Speisung eines Akkumulators und eines zuschaltbaren elektrischen Verbrauchers aus einer Eingangsspannungsquelle, mit einem selbstschwingenden Sperrwandler mit einem Übertrager, wobei parallel zur Eingangsspannungsquelle eine Reihenschaltung aus einer Primärwicklung des Übertragers, einer Kollektor-Emitter-Strecke eines ersten Transistors, eines Widerstandes und des Akkumulators geschaltet ist, und wobei die Sekundärwicklung des Übertragers in Reihe zum Akkumulator und einer ersten Diode geschaltet ist, und wobei die Basis des ersten Transistors über eine Rückkopplungsschaltung mit der Sekundärwicklung verbunden ist und an eine Steuerschaltung angeschlossen ist, die den ersten Transistor bei Erreichen einer vorgegebenen oberen Abschaltspannung am Akkumulator sperrt und bei Unterschreitung dieser Abschaltspannung oder einer vorgegebenen unteren Einschaltspannung wieder freigibt.

Ein derartiges Schaltnetzteil ist aus der EP 0 162 341 A1 bekannt und weist im Ansteuerkreis des Schalttransistors eine Kippstufe auf, deren Schaltzustand von der am Akkumulator anliegenden Spannung abhängt. Die Kippstufe sperrt den Schalttransistor, wenn eine vorgegebene Akkumulatorspannung überschritten wird und gibt den Schalttransistor wieder frei, wenn eine unter der Abschaltspannung liegende Akkumulatorspannung unterschritten wird. Damit wird ein hoher, konstanter Schnelladestrom bei geringer Ladezeit und ein geringer Erhaltungsladestrom für den Akkumulator erzielt, d.h. die Ladekennlinie des Akkumulators weist einen ausgeprägten Knick auf.

Ein Problem bei der Abschaltung des Schalttransistors in Abhängigkeit von der Akkumulatorspannung besteht darin, daß aus Gründen der Meßgenauigkeit die Spannungserfassung jeweils am Ende eines Schwingungsintervalls erfolgt und daß der den Schalttransistor ansteuernde Steuertransistor während eines Sperrschwingerintervalls ein- und damit der Schalttransistor ausgeschaltet wird, daß aber am Ende des Sperrschwingerintervalls der Steuertransistor wieder abgeschaltet und damit der Schalttransistor erneut freigegeben wird, wenn die vorgegebene Akkumulatorspannung am Ende des Sperrschwingerintervalls nicht erreicht wird. Aufgrund der unvermeidlichen Ladeverzugszeiten kann der Steuertransistor nicht wieder so schnell eingeschaltet werden, daß er den Schalttransistor im folgenden Sperrschwingerintervall sperrt.

Aus der EP 0 226 253 A1 ist es bekannt, einen Eingang der Kippstufe zur Ansteuerung des Steuertransistors an einen parallel zum Akkumulator geschalteten Spannungsteiler und einen zweiten Eingang der Kippstufe an einen Anschluß des Akkumulators anzuschließen, wobei in Reihe zum Spannungsteiler ein Schalter vorgesehen ist, der eingeschaltet wird, wenn der Schalttransistor ausgeschaltet ist. Die beiden Eingänge der Kippstufe sind zusätzlich über zwei gleichsinnig gepolte Dioden mit einem Anschluß der Sekundärwicklung des Übertragers verbunden.

Zur Ansteuerung des in Reihe zu dem Spannungsteiler als Schalter angeordneten Transistors ist eine Schaltung vorgesehen, bei der der Einfluß höherer Eingangsspannungen auf das Schaltverhalten unter Berücksichtigung der Ladeverzugszeit des Schalttransistors eliminiert wird. Eine höhere Eingangsspannung wirkt sich auf den zu regelnden Ladestrom des Akkumulators dahingehend aus, daß bei einer konstanten Ladeverzugszeit des Schalttransistors eine erhöhte Spannung wegen der gleichbleibenden Dauer des Einschaltens des Schalttransistors zu einem erhöhten Ladestrom und damit zu einer Funktionsbeeinträchtigung der Ladeschaltung führt.

Aus der US-A-4,965,506 ist eine Steuereinrichtung für ein elektronisches Schaltnetzteil bekannt, bei der ebenfalls eine Kippstufe in Form einer Schmitt-Triggerschaltung zur Sperrung eines Schalttransistors dient, wenn am Ende eines Schwingungsintervalls eine vorgegebene Akkumulatorspannung überschritten wird. Die Freigabe des Schalttransistors erfolgt bei dieser Steuereinrichtung, wenn eine vorgegebene geringere Akkumulatorspannung unterschritten wird, so daß eine Schalthysterese gebildet wird.

Zur Kompensation der Eingangsspannung und damit zur Einhaltung eines vorgegebenen Schnellade- und Erhaltungsladestroms ist ein Widerstandsnetzwerk angegeben, das an die Sekundärwicklung des Übertragers angeschlossen ist und einen zusätzlichen Transistor ansteuert, der den Schalttransistor mit steigenden Werten des Primärstroms früher abschaltet. Ein vollständiges Abschalten des Schaltnetzteils in Abhängigkeit von den Schwingungsphasen und Schwingungspausen ist jedoch nicht vorgesehen. Der Dauerladebetrieb wird permanent aufrechterhalten, auch wenn der aus dem Akkumulator gespeiste Verbraucher nicht betätigt wird und das Schaltnetzteil permanent an das speisende Spannungsnetz angeschlossen ist.

Bei manchen Akkumulatortypen, beispielsweise bei Nickel-Hydrid-Akkumulatoren, wirkt sich aber auch ein geringer Dauerladestrom schädlich auf die Lebensdauer aus. Kleine Haushaltsgeräte, wie beispielsweise elektrische Rasierapparate oder elektrische Zahnbürsten, werden oft in Wandhaltern aufbewahrt, über die der Akkumulator aufgeladen wird. Solche Geräte sind also permanent mit der Eingangsspannungsquelle (dem Netz) verbunden, so daß bei herkömmlichen Schaltnetzteilen mit selbstschwingenden Sperrwandlern ein Dauerladestrom (Erhaltungsladestrom) in den Akkumulator fließt.

Aufgabe der Erfindung ist es, bei solchen Geräten die Lebensdauer des Akkumulators zu verlängern.

Diese Aufgabe wird dadurch gelöst, daß eine Abschalteinrichtung vorgesehen ist, die den ersten Transistor dauerhaft sperrt, wenn im pulsierenden Betrieb des Schaltnetzteils das Verhältnis der Dauer der Schwingungspausen zu der Dauer der Schwingungspakete eine bestimmte Größe überschreitet.

Die Größe dieses Verhältnisses wird vorteilhafterweise so gewählt, daß sie dem normalerweise fließenden Erhaltungsladestrom entspricht. Es ist so gewährleistet, daß der Akkumulator vollgeladen ist, bevor der erste Transistor dauerhaft gesperrt wird.

Die Abschalteinrichtung ist so ausgebildet, daß sie den ersten Transistor erst wieder freigibt, wenn das Schaltnetzteil vorher von der Eingangsspannungsquelle getrennt wurde (Netzstecker gezogen oder vom Wandhalter genommen) oder wenn der elektrische Verbraucher zugeschaltet wurde (Motor eingeschaltet) oder wenn die Akkumulatorspannung deutlich unter ihren Soll-Wert gesunken ist, beispielsweise der Akkumulator nur noch halb voll ist.

In vorteilhafter Weise ist die Abschalteinrichtung so ausgeführt, daß ein mit der Basis eines Abschalttransistors verbundener Kondensator während der Schwingungspausen des Sperrwandlers aufgeladen und während der Dauer der Schwingungspakete entladen wird, wodurch der Abschalttransistor ab einem bestimmten Pausen-/Puls-Verhältnis durchgeschaltet wird und den ersten Transistor dauerhaft sperrt.

Weitere Ausgestaltungen sind in den übrigen Unteransprüchen angegeben.

Im folgenden wird die Erfindung anhand von in der Zeichnung dargestellten Ausführungsbeispielen näher erläutert. Es zeigen:
- Fig. 1: ein Prinzipschaltbild eines elektronischen Schaltnetzteils mit einer Abschalteinrichtung,
- Fig. 2: ein erstes detailliertes Ausführungsbeispiel anhand der in der deutschen Patentanmeldung P 41 22 544.9-32 beschriebenen Schaltungsanordnung,
- Fig. 3: ein zweites detailliertes Ausführungsbeispiel anhand der gleichen Schaltungsanordnung,
- Fig. 4: den Verlauf des Ladestroms in % des Anfangsstroms beim Laden eines Akkumulators in Abhängigkeit von der Ladezeit bei einer Anordnung nach Fig. 2 und
- Fig. 5: den zeitlichen Verlauf der Spannung am Punkt P1 in Fig. 2 (obere Kurve) und am Punkt P8 in Fig. 2 (untere Kurve).

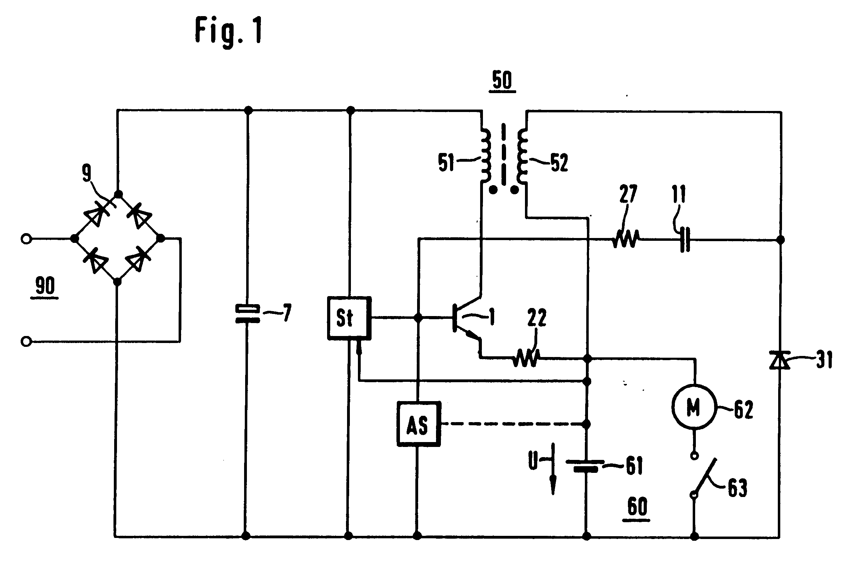

Das in Fig. 1 dargestellte Prinzipschaltbild eines elektronischen Schaltnetzteils besteht aus einem über eine Gleichrichter-Brückenschaltung 9 aus einer Gleich- oder Wechselspannungsquelle 90 gespeisten Sperrwandler. Parallel zu den Eingangs-Gleichspannungsklemmen der Gleichrichter-Brückenschaltung 9 ist ein Eingangskondensator 7 zum Sieben und Glätten der Eingangsspannung geschaltet.

Parallel zum Eingangskondensator 7 ist die Reihenschaltung der Primärwicklung 51 eines Übertragers 50 mit der Laststrecke eines Transistors 1 und eines Widerstandes 22 geschaltet. Die Sekundärwicklung 52 des Übertragers 50 ist in Reihe zu einer Diode 31 und einer Last 60 geschaltet. Die Last 60 besteht aus einem Akkumulator 61 und einem über einen Schalter 63 zuschaltbaren elektrischen Verbraucher 62, beispielsweise einem Gleichstrommotor.

Die Basis des Transistors 1 ist über eine Rückkopplungsschaltung, bestehend aus der Reihenschaltung eines Rückkopplungswiderstandes 27 und eines Rückkopplungskondensators 11, mit dem einen Wicklungsende der Sekundärwicklung 52 des Übertragers 50 und mit einer Steuerschaltung St verbunden. Die Steuerschaltung St wird von der Spannung U am Akkumulator 61 beeinflußt, d.h., bei Erreichen einer vorgegebenen Spannung U wird der Transistor 1 gesperrt, so daß er nicht sofort wieder anschwingen kann, und erst nach Absinken der Spannung U wird dieser wieder freigegeben. Auf diese Weise entstehen Schwingungspakete (Zeiten, in denen der Sperrwandler schwingt) mit dazwischen liegenden Schwingungspausen. Je mehr sich der Akkumulator dem Vollzustand nähert, umso länger werden die Schwingungspausen im Vergleich zu den Schwingungspaketen, bis nur noch ein geringer Erhaltungsladestrom fließt.

Erreicht das Verhältnis der Dauer von Impulspausen zur Dauer von Impulspaketen eine bestimmte vorgegebene Größe, die vorteilhafterweise dem normalerweise fließenden Erhaltungsladestrom entspricht (der Akkumulator also voll geladen ist), sperrt die Abschalteinrichtung AS die Basis des Transistors 1 dauerhaft.

"Dauerhaft" bedeutet hier, daß der Transistor 1 nicht schon nach kurzer Zeit, wenn die Spannung U am Akkumulator nur geringfügig abgesunken ist, wieder einschalten kann.

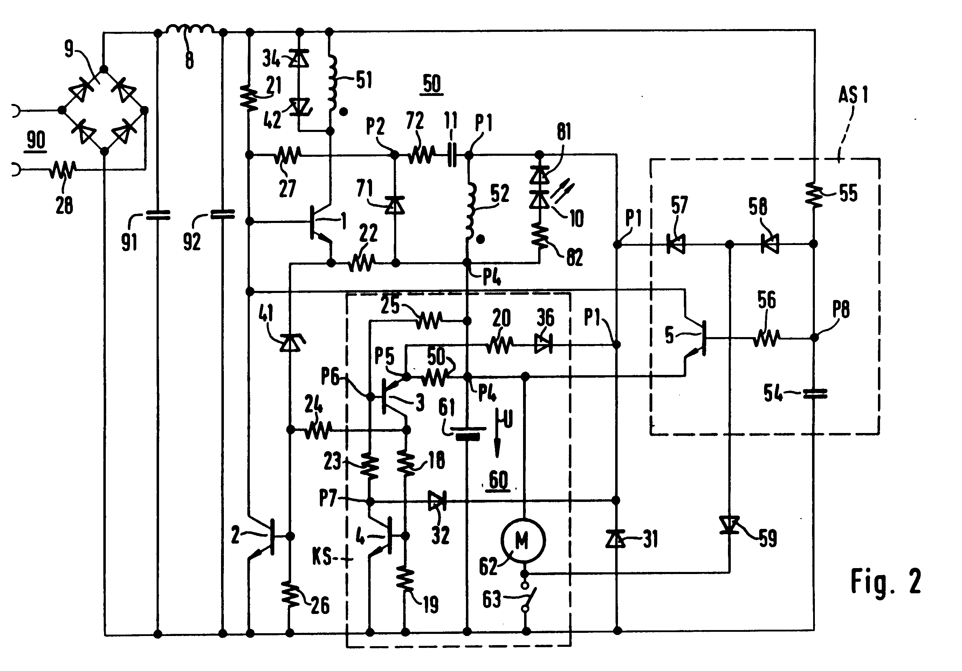

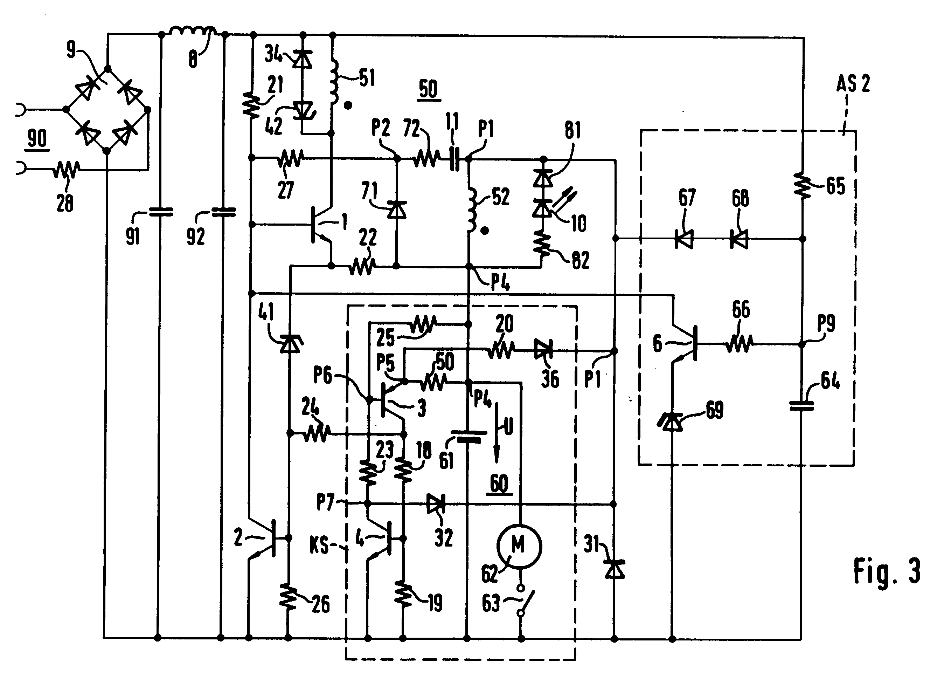

Die Abschalteinrichtung AS gibt den Transistor 1 wieder frei, wenn das Schaltnetzteil von der Eingangsspannungsquelle 90 getrennt war (der Netzstecker gezogen war) oder wenn der elektrische Verbraucher 62 über den Schalter 63 eingeschaltet wird oder wenn die Spannung U am Akkumulator 61 deutlich unter die Soll-Spannung gefallen ist. Diese Maßnahmen, die den Transistor 1 wieder freigeben, so daß das Schaltnetzteil wieder anschwingen kann, können einzeln oder in Kombination angewandt werden. Das erste Ausführungsbeispiel einer Abschalteinrichtung AS1 nach Fig. 2 hebt die Sperrung des Transistors 1 wieder auf, wenn entweder der Netzstecker gezogen war oder wenn der Motor eingeschaltet wird. Das zweite Ausführungsbeispiel einer Abschalteinrichtung AS2 nach Fig. 3 gibt den Transistor 1 wieder frei, wenn entweder der Netzstecker gezogen war oder wenn die Spannung am Akkumulator deutlich unter den dem Volladezustand entsprechenden Wert gefallen ist, der Akkumulator beispielsweise nur noch halb voll geladen ist.

In Fig. 2 ist ein elektronisches Schaltnetzteil dargestellt, das aus einem selbstschwingenden Sperrwandler mit einem Übertrager 50 und einem Transistor 1 sowie einer im Lastkreis vorgesehenen Diode 31 besteht. Der Sperrwandler wird über eine Gleichrichter-Brückenschaltung 9 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann. Die gleichgerichtete Ausgangsspannung wird über eine Sieb- und Glättungsanordnung, bestehend aus einer Längsdrossel 8 und zwei Glättungskondensatoren 91, 92, an den Eingang des Sperrwandlers bzw. der Steuer- und Regelelektronik gelegt.

Parallel zu den Gleichspannungsklemmen ist die Reihenschaltung der Primärwicklung 51 des Übertragers 50 mit der Kollektor-Emitter-Strecke des Transistors 1, einem Widerstand 22 und einem Akkumulator 61 geschaltet. An die Basis des Transistors 1 ist ein Widerstand 21 angeschlossen, der über die Längsdrossel 8 mit dem positiven Pol der Eingangsspannungsklemme verbunden ist. Darüber hinaus ist die Basis des Transistors 1 über die Kollektor-Emitter-Strecke eines Transistors 2 mit Masse- oder Bezugspotential verbunden. Der Emitter des Transistors 1 ist an die Katode einer Zenerdiode 41 angeschlossen, deren Anode sowohl mit der Basis des Transistors 2 als auch über einen Widerstand 26 mit Masse- oder Bezugspotential verbunden ist. Außerdem ist der Emitter des Transistors 1 über den Widerstand 22 an ein Wicklungsende (P4) der Sekundärwicklung 52 des Übertragers 50 angeschlossen. Der Wickelsinn der Primär- und Sekundärwicklung des Übertragers 50 ist durch die eingetragenen Punkte angedeutet.

Ein Rückkopplungs-Kondensator 11 ist über einen Rückkopplungs-Widerstand 27 mit der Basis des Transistors 1 und unmittelbar mit dem einen Wicklungsende (P1) der Sekundärwicklung 52 des Übertragers 50 verbunden. An das andere Wicklungsende (P4) der Sekundärwicklung 52 ist die Last 60, bestehend aus der Parallelschaltung eines Akkumulators 61 mit der Reihenschaltung eines Schalters 63 und eines Gleichstrommotors 62, angeschlossen.

Die Katode der im Lastkreis angeordneten Diode 31 liegt an dem einen Wicklungsende (P1) der Sekundärwicklung 52 und die Anode an dem mit Bezugspotential verbundenen Ende des Akkumulators 61.

Der Rückkopplungs-Kondensator 11 ist zusätzlich über einen Strombegrenzungswiderstand 72 mit einer Entladediode 71 verbunden, deren Katode dem Rückkopplungs-Kondensator 11 zugewandt ist (P2) und deren Anode mit dem Pluspol (P4) des Akkumulators 61 in Verbindung steht. Der Sekundärwicklung 52 ist zwischen Punkt P1 und Punkt P4 die Reihenschaltung einer Diode 81, einer Leuchtdiode 10 und einem Strombegrenzungswiderstand 82 parallel geschaltet.

Parallel zum Akkumulator 61 liegt die Reihenschaltung eines Spannungsteilers 25/23 und die Kollektor-Emitter-Strecke eines Transistors 4. An den Verbindungspunkt (P6) der Widerstände 25 und 23 dieses Spannungsteilers ist die Basis eines Transistors 3 gelegt.

Zwischen dem einen Wicklungsende (P1) der Sekundärwicklung 52 und dem Pluspol (P4) des Akkumulators 61 ist die Reihenschaltung einer Entkopplungsdiode 36 und eines Spannungsteilers 20/50 angeordnet. An dem Verbindungspunkt (P5) der Widerstände 20 und 50 liegt der Emitter des Transistors 3.

Der Kollektor des Transistors 3 ist sowohl über einen Widerstand 24 mit der Basis des Transistors 2 als auch über einen Widerstand 18 mit der Basis des Transistors 4 verbunden. Die Basis des Transistors 4 steht außerdem über einen Widerstand 19 mit Bezugspotential in Verbindung. Zwischen den Kollektoranschluß (P7) des Transistors 4 und das eine Wicklungsende (P1) der Sekundärwicklung 52 ist eine Diode 32 eingefügt, wobei der Anodenanschluß dieser Diode 32 mit dem Kollektoranschluß verbunden ist.

Zur Begrenzung der Rückschlagspannung ist parallel zur Primärwicklung 51 des Übertragers 50 eine Schaltung vorgesehen, die aus der Reihenschaltung einer Zenerdiode 42 mit einer Diode 34 besteht, die anodenseitig miteinander verbunden sind.

Bei der Abschalteinrichtung AS1 liegt die Kollektor-Emitter-Strecke eines Transistors 5 zwischen der Basis des Transistors 1 und dem Pluspol (Punkt P4) des Akkumulators 61. Über einen Widerstand 56 ist die Basis des Transistors 5 an einen Punkt P8 geführt. Der Punkt P8 steht über einen Kondensator 54 mit Bezugspotential, über einen Widerstand 55 mit dem Pluspol der Eingangsspannungsquelle 90 und über Dioden 57 und 58 mit dem einen Ende der Sekundärwicklung 52 (Punkt P1) in Verbindung. Die Dioden 57, 58 sind mit ihrer Katode der Sekundärwicklung 52 zugewandt und zwischen ihrem Verbindungspunkt und dem einen Anschluß des Motors 62 ist eine weitere Diode 59 angeordnet, wobei diese Diode 59 katodenseitig an dem mit Bezugspotential über den Schalter 63 verbindbaren Anschluß des Motors liegt.

Nachstehend soll die Funktionsweise der Schaltungsanordnung gemäß Fig. 2 näher erläutert werden.

Nach der Gleichrichtung mittels der Gleichrichter-Brückenschaltung 9 und Siebung bzw. Glättung mittels der Längsdrossel 8 bzw. der Querkondensatoren 91, 92 wird der als Schalttransistor arbeitende Transistor 1 über den Widerstand 21 mit einem geringen Basisstrom angesteuert. Infolge des einschaltenden ersten Transistors 1 entsteht über die Schaltstrecke des Transistors 1 und die Primärwicklung 51 des Übertragers 50 ein Mitkopplungseffekt, durch den der Transistor 1 zusätzlich angesteuert und in den leitenden Zustand geschaltet wird. Der Kollektorstrom steigt linear an und erzeugt am Widerstand 22 eine proportionale Spannung. Beim Erreichen eines bestimmten Spitzenstromwertes wird über die Zenerdiode 41 der Transistor 2 angesteuert, gelangt dadurch in den leitenden Zustand und verbindet die Basis des Transistors 1 mit Bezugspotential bzw. Masse und entzieht damit dem Transistor 1 den Basisstrom, woraufhin der Transistor 1 sperrt. Mit Beginn der Sperrphase wechselt die Polarität der in der Sekundärwicklung 52 des Übertragers 50 induzierten Spannung am Anschlußpunkt P1 des Rückkopplungs-Kondensator 11. Die im Übertrager 50 gespeicherte Energie wird damit nach dem Prinzip des Sperrwandlers über die Diode 31 an die Last 60 abgegeben.

Während des Umschwingvorganges des Übertragers 50 begrenzen die Diode 34 sowie die Zenerdiode 42 parallel zur Primärwicklung 51 des Übertragers 50 die Rückschlagspannungsspitze während der Sperrphase.

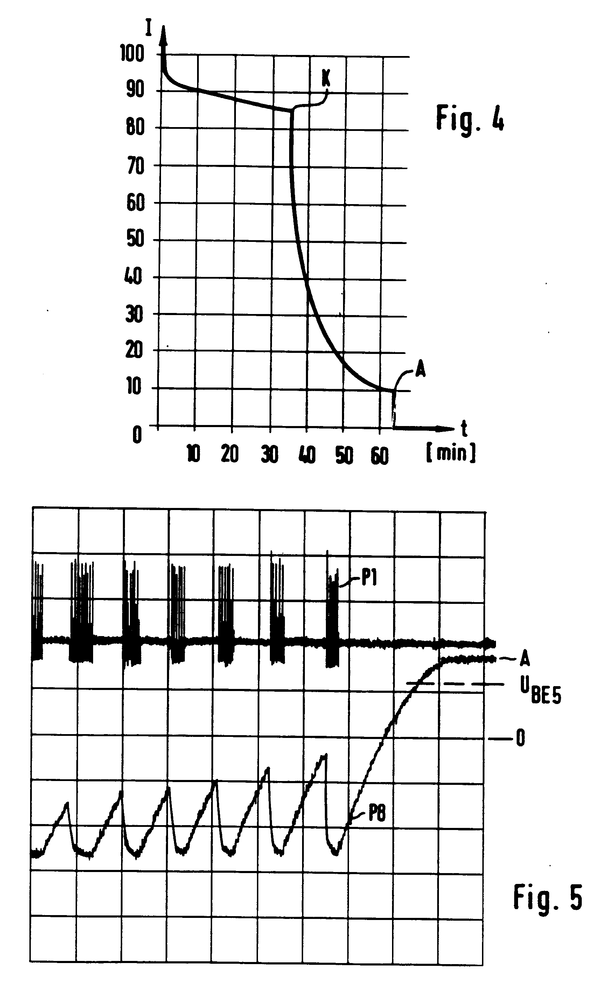

Da während der gesamten Übertrager-Entladephase negatives Potential am Punkt P1 der Sekundärwicklung 52 entsteht, wird während dieser Zeit der Punkt P7, das heißt der Verbindungspunkt des Widerstandes 23 mit dem Kollektor des. Transistors 4, über die Diode 32 auf Bezugspotentioal gelegt (gleiche Schwellenspannung der Dioden 31 und 32 angenommen). Der Spannungsteiler 25/23 ist dabei so dimensioniert, daß während dieser Stromflußphase im Sekundärkreis der Transistor 3, dessen Basis am Pukt P6 des Spannungsteilers liegt und dessen Emitter mit dem Pluspol (P4) des Akkumulators über den Widerstand 50 in Verbindung steht, in der Nähe der Abschaltspannung des Akkumulators gerade leitend wird. Hierdurch wird eine zu frühe Übersteuerung von Transistor 3 vermieden, was in Verbindung mit den später näher erläuterten Hystereseeigenschaften der Schaltung zu einer schärfer ausgeprägten Abschaltkennlinie (vgl. Fig. 4) führt. Durch den leitenden Transistor 3 wird über den Widerstand 24 auch der Transistor 2 leitend und somit der Transistor 1 gesperrt gehalten.

Im Leitzustand des Transistors 1 wurde der Rückkopplungs-Kondensator 11 über den Rückkopplungs-Widerstand 27 aufgeladen, wobei sich am Punkt P2 des Rückkopplungs-Kondensators 11 eine negative Polarität ausbildete. Diese Ladung mit negativer Polarität am Punkt P2 fließt während der Übertrager-Entladephase über die Entladediode 71 an den Pluspol des Akkumulators 61 ab, so daß auch bei niedriger Eingangsspannung (z.B. 12 Volt) der Transistor 1 am Ende der Entladephase verhältnismäßig schnell durchschalten kann, das heißt das Schaltnetzteil leicht wieder anschwingen kann. Der zwischen dem Verbindungspunkt P2 der Katode der Entladediode 71 mit dem Rückkopplungszweig (11, 27) und dem Kondensator 11 liegende Widerstand 72 dient zur Begrenzung des Stromes durch die Diode 71. Dieser Strombegrenzungswiderstand 72 kann auch zwischen die Anode der Entladediode 71 und deren Verbindung mit dem Punkt P4 eingefügt werden.

Die Leuchtdiode (LED) 10 leuchtet während der Übertrager-Entladephase, da während dieser Zeit das Potential am Wicklungsende P4 der Sekundärwicklung 52 positiv gegenüber dem Potential am Wicklungsende P1 ist. Der Widerstand 82 ist ein Strombegrenzungswiderstand. Die Diode 81 dient zum Schutz der LED vor zu großer Spannung während der Durchschaltphase des Transistors T1, wenn am Punkt P1 positives Potential ansteht.

Wie oben beschrieben, liegt der Fußpunkt (P7) des Spannungsteilers 25/23 während der Übertrager-Entladephase auf Bezugspotential und der Transistor 3 ist in der Nähe der Abschaltspannung des Akkumulators 61 leitend. Der Widerstand 25, bzw. ein Teil davon, ist zum Abgleich einstellbar ausgebildet. Der Widerstand 23, bzw. ein Teil davon, ist temperaturabhängig, um den Spannungsverlauf des Akkumulators in Abhängigkeit von der Temperatur nachzubilden.

Während dieser Stromflußphase im Sekundärkreis wird der Spannungswert des Abschaltpunktes der Akkumulatorspannung U durch den zwischen dem Pluspol (P4) des Akkumulators 61 und dem Punkt P1 angeordneten Spannungsteiler 50/20 angehoben. An den Verbindungspunkt P5 der Widerstände 50 und 20 ist der Emitter des Transistors 3 gelegt, wobei der Widerstand 50 zwischen dem Pluspol (P4) und dem Emitter und der Widerstand 20 zwischen dem Emitter und dem Punkt P1 liegt. Die zwischen dem Widerstand 20 und dem Punkt P1 eingefügte Diode 36 dient zur Entkopplung während der Flußphase des Transistors 1, das heißt wenn am Punkt P1 positives Potential herrscht.

Durch diesen Spannungsteiler 50/20 wird während der Übertrager-Entladephase die Abschaltspannung etwa um den Wert (R50 : R20) x U heraufgesetzt (der Widerstand 50 ist hierbei vernachlässigt, da er gegen den Widerstand 20 sehr klein ist), wobei R50 der Wert des Widerstandes 50 und R20 der Wert des Winderstandes 20 ist.

Hat nach Beendigung der Übertrager-Entladephase die Akkumulatorspannung U noch nicht die vorbestimmte Abschaltspannung erreicht, wird der Transistor 3 und damit auch der Transistor 4 gesperrt, das heißt, der aus den Transistoren 3 und 4 gebildete Komparator kippt in den Sperrzustand zurück. Durch den gesperrten Transistor 3 wird Transistor 2 ebenfalls gesperrt, so daß der Transistor 1 für einen neuen Einschaltvorgang freigegeben wird.

Wenn jedoch die Akkumulatorspannung U den Wert des Abschaltpunktes (Abschaltspannung) am Ende der Übertrager-Entladephase erreicht oder überschritten hat, bleibt der Transistor 3 und damit auch die Transistoren 2 und 4 leitend, das heißt der Komparator bleibt im leitenden Zustand. Durch den leitend geschalteten Transistor 2 kann der Transistor 1 nicht einschalten. Das nur während der Sekundärstromflußphase am Punkt P1 anliegende negative Potential ist jetzt nicht mehr vorhanden und damit auch nicht mehr der dadurch über den Widerstand 20 und die Diode 36 erzeugte Spannungsabfall am Widerstand 50.

Dadurch kippt die aus den Transistoren 3 und 4 gebildete Kippstufe (bzw. Komparator) KS erst dann wieder in den Sperrzustand und gibt somit den Transistor 1 erst dann wieder für einen neuen Einschaltvorgang frei, wenn die Akkumulatorspannung U die Einschaltspannung, das heißt einen unteren Spannungswert, unterschritten hat.

Die Differenz zwischen der (oberen) Abschaltspannung und der (unteren) Einschaltspannung stellt die gewollte Hysterese der Kippstufe dar.

Der Vorteil einer solchen Schaltungsanordnung mit Hysterese der Kippstufe im Vergleich mit der Schaltungsanordnung nach der EP 0 162 341 B1, deren Kippstufe bzw. Komparator keine Hystereseeigenschaften aufweist, liegt darin, daß der Ladestrom der vorliegenden Anordnung bis zur Volladung des Akkumulators nahezu konstant hoch ist und dadurch die Volladung bereits nach ca. 33 Minuten erreicht ist (ausgeprägter Knick der Abschaltkennlinie in Fig. 4), während bei der Anordnung der EP 0 162 341 B1 der Ladestrom bereits von Anfang an kontinuierlich abnimmt, so daß dort die Volladung des Akkumulators erst nach ca. 60 Minuten erreicht ist.

Trotz des höheren Ladestromes der vorliegenden Schaltungsanordnung (Fig. 4) ist der Erhaltungsladestrom, der nach Volladung des Akkumulators bei nicht vorhandener Abschalteinrichtung AS1 fließen würde, nicht höher als bei der Anordnung der EP 0 162 341 B1.

Bei der aus der EP 0 162 341 B1 bekannten Schaltungsanordnung kann die Abschalteinrichtung genauso angewandt werden.

Die Funktionsweise der in Fig. 2 gezeigten Abschalteinrichtung AS1 soll nun anhand der Figuren 4 und 5 näher erläutert werden.

Wie aus Fig. 4 ersichtlich ist, geht das Schaltnetzteil ab dem Punkt K der dargestellten Ladestromkennlinie in den pulsierenden Betrieb über. Bis zum Erreichen des Punktes A der Ladestromkennlinie in Fig. 4 wird das Verhältnis Schwingungspausen zu Schwingungspaketen immer größer, d.h., der Ladestrom wird immer kleiner. Ohne die Abschalteinrichtung AS1 würde dann etwa der am Punkt A erreichte Dauerladestrom fließen, wenn kein Verbraucher angeschaltet ist.

Das in Fig. 5 oben dargestellte Oszillogramm zeigt den pulsierenden Betrieb des Schaltnetzteils (Spannung am Punkt P1 der Sekundärwicklung 52 in Fig.2) kurz vor Erreichen des Punktes A der Ladestromkennlinie in Fig. 4. Wie deutlich zu erkennen ist, wird das Verhältnis von Dauer der Impulspausen zu Dauer der Impulspakete immer größer. Die untere Kurve in Fig. 5 zeigt den Spannungsverlauf am oberen Anschluß (Punkt P8) des Kondensators 54 in Fig. 2.

Bei Beginn eines Ladevorgangs, d. h. nach Anlegen der Eingangsspannungsquelle 90 in Fig. 2 kann der Transistor 1 anschwingen, weil die Ansteuerung des Transistors 5 infolge des Widerstands 55 und des Kondensators 54 so verzögert wird, daß der sofort einsetzende Schwingbetrieb des Schaltnetzteils am Punkt P8 (Basis des Transistors 5) über die Dioden 57 und 58 ein gegenüber dem Emitter des Transistors 5 negatives Potential erzeugen kann, so daß der Transistor 5 gesperrt bleibt.

Wenn das Schaltnetzteil ab Punkt K in Fig. 4 in den pulsierenden Betrieb übergeht, kann sich in den Schwingpausen der Kondensator 54 am Punkt P8 über den Widerstand 55 auf positives Potential aufladen, während er im Schwingbetrieb wieder über die Dioden 57, 58 entladen wird (vgl. Fig. 5). Wird nun das Verhältnis der Dauer der Impulspausen zur Dauer der Impulspakete so groß, bzw. eine Impulspause so lang, daß sich der Kondensator 54 bis auf ein Potential entsprechend der Basis-Emitter-Einschaltschwelle U_{BE5} des Transistors 5 aufladen kann, schaltet der Transistor 5 durch und entzieht dem Transistor 1 den Basisstrom, so daß dieser gesperrt bleibt und somit ein Wiederanschwingen des Schaltnetzteils verhindert wird. Der Widerstand 56 und die Doppeldiode 57, 58 (statt nur einer Diode) dienen dazu, daß sich der Kondensator 54 auf ein höheres Potential als die Basis-Emitter-Einschaltschwelle U_{BE5} bzw. die Durchlaßspannung einer Diode aufladen kann, so daß der Transistor 5 sicher durchschaltet. Die Zeitkonstante des aus dem Widerstand 55 und dem Kondensator 54 gebildeten RC-Glieds bestimmt, ab welchem Pausen-/Puls-Verhältnis der Transistor 5 durchschaltet, d.h. das Schaltnetzteil nicht wieder anschwingt.

Das Schaltnetzteil kann in dieser Konfiguration erst wieder anschwingen, wenn es zuvor von der Eingangsspannungsquelle 90 getrennt wurde, so daß sich der Kondensator 54 entladen konnte. Auch das Einschalten des Motors 62 über den Schalter 63 würde - bei immer anliegender Eingangsspannung 90, d.h., der Netzstecker wird nie gezogen - kein Wiederanschwingen des Schaltnetzteils bewirken. Um dies zu verhindern, ist zwischen dem Verbindungspunkt der beiden Dioden 57, 58 und dem bezugspotentialseitigen Anschluß des Motors 62 die Diode 59 eingefügt. Beim Schließen des Schalters 63 wird die Katode der Diode 59 auf Bezugspotential gelegt und der Kondensator 54 auf ein Potential entladen, das unter der Basis-Emitter-Schaltschwelle des Transistors 5 liegt, so daß dieser sperrt und das Schaltnetzteil wieder anschwingen kann.

In Fig. 3 ist ein zweites Ausführungsbeispiel der Abschalteinrichtung (AS2), ebenfalls anhand der Schaltungsanordnung entsprechend der deutschen Patentanmeldung P 41 22 544.9-32, dargestellt.

Der Abschalttransistor 6 ist hier zwischen der Basis des Transistors 1 und Bezugspotential angeordnet, wobei zwischen dem Emitter des Transistors 6 und Bezugspotential eine Zenerdiode 69 eingefügt ist. Die Anordnung des Basiswiderstands 66, des Widerstands 65, des Kondensators 64 und der Dioden 67, 68 entsprechen der Anordnung des Basiswiderstandes 56, des Widerstandes 55, des Kondensators 54 und der Dioden 57, 58 in der Abschalteinrichtung AS1 in Fig. 2. Die Funktionsweise des Sperrens des Transistors 1 ab einem bestimmten Pause-/Puls-Verhältnis und das Freigeben des Transistors 1 nach Trennung des Schaltnetzteils von der Eingangsspannung 90 ist ebenfalls gleich. Der Abschalttransistor 6 schaltet hier durch, wenn die Spannung an der Basis bzw. am Kondensator 64 (Punkt P9) größer ist als die Durchbruchsspannung der Zenerdiode 69 plus der Basis-Emitter-Schwellenspannung des Transistors 6.

Die in Fig. 3 gezeigte Abschalteinrichtung AS2 unterscheidet sich von der Abschalteinrichtung AS1 in Fig. 2 dadurch, daß hier der Transistor 1 auch freigegeben wird, wenn die Akkumulatorspannung U deutlich unter die dem Volladezustand entsprechende Soll-Spannung gefallen ist, beispielsweise auf fast die Hälfte. Beträgt die Basis-Emitter-Schwellenspannung eines Transistors U_{BE} = 0,6 V und die Durchbruchsspannung (Zenerspannung) der Zenerdiode 69 U_{Z69} = 1,7 V, ist der Tansistor 6 durchgeschaltet, wenn am Punkt P9 eine Spannung von 2,3 V oder mehr gegen Bezugspotential anliegt. Wenn der Transistor 6 durchgeschaltet ist, liegt an der Basis des Transistors 1 etwa (unter Vernachlässigung des Kollektor-Emitter-Spannungsabfalls des Transistors 6) die Zenerspannung U_{Z69} = 1,7 V an. Bei einem einzelligen Akkumulator 61 beträgt die Spannung U ca. 1,45 V im Vollzustand. Da der Emitter des Transistors 1 über den Widerstand 22 am Pluspol (P4) des Akkumulators 61 liegt, kann der Transistor 1 erst durchschalten, wenn die am Emitter liegenden Akkumulatorspannung U so weit abgesunken ist, daß die Basis-Emitter-Schwellenspannung U_{BE1} = 0,6 V erreicht ist. Dies wäre in diesem Beispiel bei einer Akkumulatorspannung U = 1,1 V der Fall. Dann ist U_{Z69} - U = U_{BE1} = 0,6 V. Nach der damit beginnenden Leitphase des Transistors 1 wird in der darauffolgenden Sperrphase über die Dioden 67, 68 der Transistor 6 gesperrt und der Akkumulator kann sich aufladen.

## Patentansprüche

1. Elektronisches Schaltnetzteil zur Speisung eines Akkumulators (61) und eines zuschaltbaren elektrischen Verbrauchers (62) aus einer Eingangsspannungsquelle (90), mit einem selbstschwingenden Sperrwandler mit einem Übertrager (50), wobei parallel zur Eingangsspannungsquelle (90) eine Reihenschaltung aus einer Primärwicklung (51) des Übertragers (50), einer Kollektor-Emitter-Strecke eines ersten Transistors (1), eines Widerstandes (22) und des Akkumulators (61) geschaltet ist, und wobei die Sekundärwicklung (52) des Übertragers (50) in Reihe zum Akkumulator (61) und einer ersten Diode (31) geschaltet ist, und wobei die Basis des ersten Transistors (1) über eine Rückkopplungsschaltung (11, 27) mit der Sekundärwicklung (52) verbunden ist und an eine Steuerschaltung (St) angeschlossen ist, die den ersten Transistor (1) bei Erreichen einer vorgegebenen oberen Abschaltspannung (U) am Akkumulator (61) sperrt und bei Unterschreitung dieser Abschaltspannung oder einer vorgegebenen unteren Einschaltspannung wieder freigibt,
**dadurch gekennzeichnet,**
daß eine Abschalteinrichtung (AS) vorgesehen ist, die den ersten Transistor (1) dauerhaft sperrt, wenn im pulsierenden Betrieb des Schaltnetzteils das Verhältnis der Dauer der Schwingungspausen zu der Dauer der Schwingungspakete eine bestimmte Größe überschreitet.

2. Elektronisches Schaltnetzteil nach Anspruch 1,
**dadurch gekennzeichnet,**
daß das Verhältnis der Dauer der Schwingungspausen zur Dauer der Schwingungspakete dem Erhaltungsladestrom des Akkumulators entspricht.

3. Elektronisches Schaltnetzteil nach Anspruch 1,
**dadurch gekennzeichnet,**
daß die Abschalteinrichtung (AS) den ersten Transistor (1) erst wieder freigibt, nachdem das Schaltnetzteil von der Eingangsspannungsquelle (90) getrennt wurde.

4. Elektronisches Schaltnetzteil nach Anspruch 1,
**dadurch gekennzeichnet,**
daß die Abschalteinrichtung (AS) den ersten Transistor (1) erst wieder freigibt, nachdem .der elektrische Verbraucher (62) zugeschaltet wurde.

5. Elektronisches Schaltnetzteil nach Anspruch 1,
**dadurch gekennzeichnet,**
daß die Abschalteinrichtung (AS) den ersten Transistor (1) erst wieder freigibt, nachdem die Spannung (U) am Akkumulator (61) unter eine Spannung abgesunken ist, die deutlich unterhalb der Soll-Spannung liegt.

6. Elektronisches Schaltnetzteil nach Anspruch 1,
**dadurch gekennzeichnet,**
daß die Abschalteinrichtung (AS) aus einem zwischen der Basis des ersten Transistors (1) und dem Bezugspotential oder dem dem Bezugspotential abgewandten Anschluß des Akkumulators (61) angeordneten Abschalttransistor (5, 6) besteht, dessen Basis mit einem Kondensator (54, 64) in Verbindung steht, der während der Schwingungspausen des Schaltnetzteils aufgeladen und während des Schwingens des Schaltnetzteils entladen wird.

7. Elektronisches Schaltnetzteil nach Anspruch 6,
**dadurch gekennzeichnet,**
daß die Basis des Abschalttransistors (5), der zwischen der Basis des ersten Transistors (1) und dem dem Bezugspotential abgewandten Anschluß (P4) des Akkumulators (61) angeordnet ist, über den Kondensator (54) mit Bezugspotential, über einen Widerstand (55) mit einem aus dem positiven Pol der Eingangsspannungsquelle (90) erzeugten Potential und über eine oder mehrere Dioden (57, 58) mit einem Ende (P1) der Sekundärwicklung (52) verbunden ist (Fig. 2).

8. Elektronisches Schaltnetzteil nach Anspruch 7,
**dadurch gekennzeichnet,**
daß die Basis des Abschalttransistors (5) über zwei Dioden (57, 58) mit einem Ende (P1) der Sekundärwicklung (52) verbunden ist und daß zwischen dem Verbindungspunkt der beiden Dioden (57, 58) und dem Anschluß des elektrischen Verbrauchers (62), der über einen Schalter (63) mit Bezugspotential verbindbar ist, eine weitere Diode (59) angeordnet ist (Fig. 2).

9. Elektronisches Schaltnetzteil nach Anspruch 6,
**dadurch gekennzeichnet,**
daß der Emitter des Abschalttransistors (6) über eine ab einer bestimmten Spannung leitend werdende Schalteinrichtung (69) mit dem Bezugspotential verbunden ist und daß die Basis des Abschalttransistors (6) über den Kondensator (64) mit Bezugspotential, über einen Widerstand (65) mit einem aus dem positiven Pol der Eingangsspannungsquelle (90) erzeugten Potential und über eine oder mehrere Dioden (67, 68) mit einem Ende (P1) der Sekundärwicklung (52) verbunden ist (Fig. 3).

10. Elektronisches Schaltnetzteil nach Anspruch 1,
**dadurch gekennzeichnet,**
daß die Steuerschaltung (St) aus einem mit dem Pol der Eingangsspannungsquelle (90) in Verbindung stehenden Anlaufwiderstand (21) und einem mit Bezugspotential verbundenen zweiten Transistor (2) besteht, dessen Basis über eine Zenerdiode (41) mit dem Emitter des ersten Transistors (1) und mit einer die Spannung (U) am Akkumulator (61) überwachenden Kippstufe (KS) verbunden ist, die den ersten Transistor (1) bei Erreichen einer vorgegebenen oberen Abschaltspannung am Akkumulator (61) sperrt und bei Unterschreiten einer vorgegebenen unteren Einschaltspannung freigibt.

11. Elektronisches Schaltnetzteil nach Anspruch 10,
**dadurch gekennzeichnet,**
daß die Kippstufe (KS) aus einem dritten Transistor (3) und einem vierten Transistor (4) besteht, der Emitter des dritten Transistors (3) an den Verbindungspunkt (P5) eines zwischen dem einen Wicklungsende (P1) der Sekundärwicklung (52) und dem Akkumulator (61) angeordneten ersten Spannungsteiler (20, 50) angeschlossen ist, die Basis des dritten Transistors (3) an den Verbindungspunkt (P6) eines zwischen dem Akkumulator (61) und dem Kollektor (P7) des vierten Transistors (4) angeordnete zweiten Spannungsteilers (25, 23) angeschlossen ist, der Kollektor (P7) des vierten Transistors (4), dessen Emitter mit Bezugspotential verbunden ist, des weiteren über eine Diode (32) mit dem einen Wicklungsende (P1) der Sekundärwicklung (52) in Verbindung steht und sowohl der zweite Transistor (2) als auch der vierte Transistor (4) vom dritten Transistor (3) angesteuert werden.

## Claims

1. An electronic switched-mode power supply for supplying current from an input voltage source (90) to an accumulator (61) and to an electrical load (62) adapted to be switched on, comprising a self-oscillating flyback converter having a transformer (50), with a series arrangement comprising a primary winding (51) of the transformer (50), a collector-emitter circuit of a first transistor (1), a resistor (22) and the accumulator (61) being connected in parallel with the input voltage source (90), with the secondary winding (52) of the transformer (50) being connected in series with the accumulator (61) and a first diode (31), and with the base of the first transistor (1) being connected to the secondary winding (52) through a feedback circuit (11, 27), in addition to being coupled to a control circuit (St) inhibiting conduction of the first transistor (1) when the voltage at the accumulator (61) has reached a predetermined upper turn-off value (U), and enabling it to conduct again after the voltage has dropped below said turn-off value or a predetermined lower turn-on value,
**characterized in that** an interrupting device (AS) is provided turning the first transistor (1) off for a prolonged period when, with the switched-mode power supply in the pulsating mode, the ratio of oscillation off-time to the duration of oscillation bursts exceeds a predetermined magnitude.

2. The electronic switched-mode power supply as claimed in claim 1,
**characterized in that** the ratio of oscillation off-time to the duration of oscillation bursts corresponds to the trickle charging current of the accumulator.

3. The electronic switched-mode power supply as claimed in claim 1,
**characterized in that** the interrupting device (AS) does not enable the first transistor (1) to conduct again until after the switched-mode power supply was disconnected from the input voltage source (90).

4. The electronic switched-mode power supply as claimed in claim 1,
**characterized in that** the interrupting device (AS) does not enable the first transistor (1) to conduct again until after the electrical load (62) was switched on.

5. The electronic switched-mode power supply as claimed in claim 1,
**characterized in that** the interrupting device (AS) does not enable the first transistor (1) to conduct again until after the voltage (U) at the accumulator (61) has dropped below a value lying significantly below the set point.

6. The electronic switched-mode power supply as claimed in claim 1,
**characterized in that** the interrupting device (AS) is comprised of a turn-off transistor (5, 6) located between the base of the first transistor (1) and reference potential or the terminal of the accumulator (61) on the side remote from reference potential, the base of said turn-off transistor being connected to a capacitor (54, 64) which is charged during oscillation off-time of the switched-mode power supply, discharging with the switched-mode power supply in the oscillating mode.

7. The electronic switched-mode power supply as claimed in claim 6,
**characterized in that** the base of the turn-off transistor (5) located between the base of the first transistor (1) and the terminal (P4) of the accumulator (61) on the side remote from reference potential is connected to reference potential through the capacitor (54), to a potential obtained from the positive pole of the input voltage source (90) through a resistor (55), and to an end (P1) of the secondary winding (52) through one or several diodes (57, 58) (FIG. 2).

8. The electronic switched-mode power supply as claimed in claim 7,
**characterized in that** the base of the turn-off transistor (5) is connected to one end (P1) of the secondary winding (52) through two diodes (57, 58), and that a further diode (59) is arranged between the junction of the two diodes (57, 58) and the terminal of the electrical load (62) which is connectible to reference potential by means of a switch (63) (FIG. 2).

9. The electronic switched-mode power supply as claimed in claim 6,
**characterized in that** the emitter of the turn-off transistor (6) is connected to reference potential through a switching device (69) going into conduction from a specified voltage on, and that the base of the turn-off transistor (6) is connected to reference potential through the capacitor (64), to a potential obtained from the positive pole of the input voltage source (90) through a resistor (65), and to an end (P1) of the secondary winding (52) through one or several diodes (67, 68) (FIG. 3).

10. The electronic switched-mode power supply as claimed in claim 1,
**characterized in that** the con trol circuit (St) is comprised of a starting resistor (21) connected to the pole of the input voltage source (90) and of a second transistor (2) connected to reference potential whose base is connected, through a Zener diode (41), to the emitter of the first transistor (1) and to a trigger circuit (KS) monitoring the voltage (U) at the accumulator (61), said trigger circuit inhibiting conduction of the first transistor (1) when the voltage at the accumulator (61) has reached a predetermined upper turn-off value, rendering it conducting again when the voltage has dropped below a predetermined lower turn-on value.

11. The electronic switched-mode power supply as claimed in claim 10,
**characterized in that** the trigger circuit (KS) is comprised of a third transistor (3) and a fourth transistor (4), that the emitter of the third transistor (3) is connected to the junction (P5) of a first voltage divider (20, 50) arranged between the one end (P1) of the secondary winding (52) and the accumulator (61), that the base of the third transistor (3) is connected to the junction (P6) of a second voltage divider (25, 23) arranged between the accumulator (61) and the collector (P7) of the fourth transistor (4), that the collector (P7) of the fourth transistor (4) whose emitter is connected to reference potential is further connected, through a diode (32), to the one end (P1) of the secondary winding (52), and that both the second transistor (2) and the fourth transistor (4) are driven by the third transistor (3).

## Revendications

1. Alimentation électronique à découpage pour alimenter un accumulateur (61), ainsi qu'un consommateur électrique (62) pouvant être mis en service en plus, à partir d'une source de tension d'entrée (90), comprenant un convertisseur auto-oscillant à phase bloquée possédant un transformateur (50), alimentation dans laquelle le montage en série de l'enroulement primaire (51) du transformateur (50), du circuit collecteur-émetteur d'un premier transistor (1), d'une résistance (22) et de l'accumulateur (61) est connecté en parallèle avec la source de tension d'entrée (90), dans laquelle l'enroulement secondaire (52) du transformateur (50) est connecté en série avec l'accumulateur (61) et une première diode (31), et dans laquelle la base du premier transistor (1) est reliée à travers un circuit de rétroaction (11, 27) à l'enroulement secondaire (52) et raccordée à un circuit de commande (St) qui bloque le premier transistor (1) lorsqu'une tension supérieure de coupure (U) préfixée est atteinte aux bornes de l'accumulateur (61) et libère de nouveau ce transistor (1) lorsque la tension aux bornes de l'accumulateur (61) descend au-dessous de cette tension de coupure ou d'une tension inférieure d'enclenchement préfixée,
caractérisée en ce qu'elle comprend un dispositif de coupure (AS) qui bloque le premier transistor (1) durablement lorsque, pendant le fonctionnement pulsé de l'alimentation à découpage, le rapport de la durée des absences d'impulsions à la durée des paquets d'impulsions dépasse une grandeur déterminée.

2. Alimentation électronique à découpage selon la revendication 1, caractérisée en ce que le rapport de la durée des absences d'impulsion à la durée des paquets d'impulsions correspond au courant de charge d'entretien de l'accumulateur.

3. Alimentation électronique à découpage selon la revendication 1, caractérisée en ce que le dispositif de coupure (AS) libère seulement le premier transistor (1) après que l'alimentation à découpage a été séparée de la source de tension d'entrée (90).

4. Alimentation électronique à découpage selon la revendication 1, caractérisée en ce que le dispositif de coupure (AS) libère seulement le premier transistor (1) après que le consommateur électrique (62) a été mis en service.

5. Alimentation électronique à découpage selon la revendication 1, caractérisée en ce que le dispositif de coupure (AS) libère seulement le premier transistor (1) après que la tension (U) aux bornes de l'accumulateur (61) est descendue sous une tension qui est nettement inférieure à la tension de consigne.

6. Alimentation électronique à découpage selon la revendication 1, caractérisée en ce que le dispositif de coupure (AS) est formé d'un transistor de coupure (5, 6) disposé entre la base du premier transistor (1) et le potentiel de référence ou la borne de l'accumulateur (61) éloignée du potentiel de référence, transistor de coupure (5, 6) dont la base est reliée à un condensateur (54, 64) chargé pendant les absences d'oscillation de l'alimentation à découpage et déchargé pendant l'oscillation de l'alimentation à découpage.

7. Alimentation électronique à découpage selon la revendication 6, caractérisée en ce que la base du transistor de coupure (5), lequel est disposé entre la base du premier transistor (1) et la borne (P4) de l'accumulateur (61) éloignée du potentiel de référence, est reliée à travers le condensateur (54) au potentiel de référence, à travers une résistance (55) à un potentiel produit à partir du pôle positif de la source de tension d'entrée (90) et à travers une ou plusieurs diodes (57, 58) à une extrémité (P1) de l'enroulement secondaire (52) (figure 2).

8. Alimentation électronique à découpage selon la revendication 7, caractérisée en ce que la base du transistor de coupure (5) est reliée à travers deux diodes (57, 58) à une extrémité (P1) de l'enroulement secondaire (52) et qu'une diode supplémentaire (59) est disposée entre le point de connexion des deux diodes (57, 58) et une borne du consommateur électrique (62) pouvant être reliée à travers un interrupteur (63) au potentiel de référence (figure 2).

9. Alimentation électronique à découpage selon la revendication 6, caractérisée en ce que l'émetteur du transistor de coupure (6) est relié au potentiel de référence à travers un dispositif de commutation (69) devenant conducteur à partir d'une tension déterminée, et que la base du transistor de coupure (6) est reliée à travers le condensateur (64) au potentiel de référence, à travers une résistance (65) à un potentiel produit à partir du pôle positif de la source de tension d'entrée (90) et à travers une ou plusieurs diodes (67, 68) à une extrémité (P1) de l'enroulement secondaire (52) (figure 3).

10. Alimentation électronique à découpage selon la revendication 1, caractérisée en ce que le circuit de commande (St) est formé d'une résistance de démarrage (21) reliée à un pôle de la source de tension d'entrée (90) et d'un deuxième transistor (2), relié au potentiel de référence, dont la base est connectée à travers une diode Zener (41) à l'émetteur du premier transistor (1) et à un basculeur (KS) surveillant la tension (U) aux bornes de l'accumulateur (61), basculeur (KS) qui bloque le premier transistor (1) lorsqu'une tension supérieure de coupure préfixée est atteinte aux bornes de l'accumulateur (61) et qui libère ce transistor lorsque la tension aux bornes de l'accumulateur descend sous une tension inférieure d'enclenchement préfixée.

11. Alimentation électronique à découpage selon la revendication 10, caractérisée en ce que le basculeur (KS) est formé d'un troisième transistor (3) et d'un quatrième transistor (4), l'émetteur du troisième transistor (3) est raccordé au point de connexion (P5) d'un premier diviseur de tension (20, 51) disposé entre la première extrémité (P1) de l'enroulement secondaire (52) et l'accumulateur (61), la base du troisième transistor (3) est raccordée au point de connexion (P6) d'un second diviseur de tension (25, 23) disposé entre l'accumulateur (61) et le collecteur (P7) du quatrième transistor (4), le collecteur (P7) du quatrième transistor (4), dont l'émetteur est relié au potentiel de référence, est connecté en outre à travers une diode (32) à la première extrémité (P1) de l'enroulement secondaire (52) et le troisième transistor (3) commande à la fois le deuxième transistor (2) et le quatrième transistor (4).
